# EUROPÄISCHE PATENTSCHRIFT

(11) **EP 2 124 812 B1**
(45) Veröffentlichungstag und Bekanntmachung des Hinweises auf die Patenterteilung: **14.11.2018**
(21) Anmeldenummer: 08715740.0
(22) Anmeldetag: 12.02.2008
(51) Int. Cl.: A61C 17/02

(54) **MEDIZINISCHES, INSBESONDERE DENTALMEDIZINISCHES, HANDSTÜCK MIT ZWEI VONEINANDER GETRENNTEN AUSTRITTSÖFFNUNGEN FÜR MEDIEN**
MEDICAL HANDLE PIECE IN PARTICULAR FOR DENTAL MEDICINE WITH TWO SEPARATE OUTLET OPENINGS FOR MEDIA
PIÈCE À MAIN MÉDICALE, EN PARTICULIER MÉDICO-DENTAIRE, COMPORTANT DEUX OUVERTURES DE SORTIE DISTINCTES POUR DES SUBSTANCES

(30) Priorität: 14.02.2007 DE 102007007340
(43) Veröffentlichungstag der Anmeldung: 02.12.2009
(73) Patentinhaber: Kaltenbach & Voigt GmbH, 88400 Biberach (DE)
(72) Erfinder: MÖSSLANG, Hubert, 89610 Oberdischingen (DE); LIEBHARDT, Franz, 88416 Ochsenhausen (DE)
(74) Vertreter: Thun, Clemens
(86) Internationale Anmeldenummer: PCT/EP2008/001065
(87) Internationale Veröffentlichungsnummer: WO 2008/098740

(56) Entgegenhaltungen:
- EP-A- 1 391 182
- DE-A1- 3 337 166
- DE-A1- 3 734 862
- FR-A- 1 285 767
- US-B1- 6 305 934

## Beschreibung

Die Erfindung betrifft ein medizinisches, insbesondere dentalmedizinisches, Handstück nach Anspruch 1. Bei ärztlichen oder zahnärztlichen Handstücken unterscheidet man zwischen solchen, die mit einem Werkzeug zur Behandlung des menschlichen oder tierischen Körpers bestückt oder bestückbar sind und mit denen mechanisch auf den menschlichen oder tierischen Körper oder auf ein Modell eingewirkt wird, und solchen Handstücken, die dazu dienen, die Behandlungsstelle des menschlichen oder tierischen Körpers in einem operationsfähigen Zustand zu halten, und die zum Beispiel Wasser und/oder Luft zur Kühlung und Reinigung der Behandlungsstelle zuführen, oder Licht zur Behandlungsstelle zuführen, oder Körperflüssigkeit, z.B. Speichel oder Blut, von der Behandlungsstelle abführen oder die Behandlungsstelle sondieren. Im vorliegenden medizinischen Fachbereich wird die erste Art Handstücke mit Arbeitshandstücke und die zweite Art mit Funktionshandstücke bezeichnet. Bei einem Funktionshandstück kann es sich somit um ein Spül- und/oder Blas- oder Saughandstück bzw. Kanülenhandstück oder ein Beleuchtungshandstück oder ein Sondenhandstück handeln.
Ein dentalmedizinisches Handstück gemäß den im Oberbegriff des Anspruchs 1 oder 3 angegebenen Arten ist als Funktionshandstück in Form eines Spül- und Blashandstücks bzw. Kanülenhandstück in der US 2005/0048436 A1 beschrieben und somit vorbekannt. Dieses Handstück dient dazu, Wasser und/oder Luft oder Licht der Behandlungsstelle zuzuführen. Es weist ein längliches Griffteil auf, mit dessen vorderem Ende eine Kanüle lösbar verbunden ist, die aus lichtdurchlässigem Material besteht, so dass sie als Lichtleiter dient und das Licht am Stirnende der Kanüle abstrahlt. Eine Medienleitung für Luft und eine Medienleitung für Wasser erstrecken sich längs durch das Vollmaterial der Kanüle, wobei sie stirnseitig aus der Kanüle an voneinander beabstandeten Austrittsöffnungen austreten. Das jeweils gewünschte Medium Wasser oder Luft und eine zugehörige Lichtquelle lassen sich jeweils durch die manuelle Betätigung eines Betätigungsglieds wahlweise ein- und abschalten.

In der US 3 397 457 ist ein gattungsgemäßes dentalmedizinisches Handstück beschrieben, das als Arbeitshandstück ausgebildet ist und eine sogenannte Antriebshülse aufweist, die durch einen Antriebsmotor drehbar ist und eine von einer Seite zugängliche Einstecköffnung für ein Werkzeug aufweist. Dieses vorbekannte Arbeitshandstück weist in einem von der Einstecköffnung nach hinten gerichteten Abstand eine Austrittszone auf, in der zwei Medienleitungen und ein Lichtleiter münden, wobei die Achsen der Austrittsöffnungen der Medienleitungen und der Austrittsfläche des Lichtleiters schräg auf den freien Endbereich eines eingesteckten Werkzeugs gerichtet sind.

Ein medizinisches, insbesondere dentalmedizinisches, Handstück wird in den meisten Gebrauchsfällen an kleinen Behandlungsstellen eingesetzt, z. B. auch in Körperhöhlen, wie in einem Mundraum eines Patienten. Es ist deshalb eine kleine Konstruktion gefordert, um zum einen die Behandlungs- bzw. Arbeitsstelle raumgünstig zu erreichen und zum anderen die visuelle Sicht auf die Behandlungs- bzw. Arbeitsstelle möglichst wenig zu beeinträchtigen. Hierdurch ergeben sich im Bereich der Medienaustrittsöffnungen schwierige Konstruktionen. Es ist von einem in der DE 35 00 085 C2 beschriebenen Handstück bekannt, die austretende Luft und das austretende Wasser im Bereich einer gemeinsamen Austrittsöffnung zu einem Spray zu vermischen, wobei ausschließlich Spray aus der Austrittsöffnung austritt.
Es ist außerdem anzustreben, dass das vom Lichtleiter abgestrahlte Licht günstig und möglichst ohne Schattenbildung auf die Behandlungs- bzw. Arbeitsstelle gerichtet sein soll.

Aufgrund der anzustrebenden vorbeschriebenen kleinen Konstruktion für ein medizinisches, insbesondere dentalmedizinisches, Handstück ergeben sich bei den bekannten Handstücken komplizierte und deshalb teure Ausgestaltungen, was vermieden werden soll. Bei dem vorbeschriebenen, aus US 2005/0048436 A1 bekannten Handstück sind z. B. die Medienkanäle in den eine Kanüle bildenden Lichtleiter einzuarbeiten.
Diese Nachteile gelten auch für eine aus Fig. 7 von DE 35 00 085 C2 entnehmbare Ausgestaltung eines Kanülenhandstücks, bei der zwei Medienleitungen in Form von Röhrchen sich im hinteren Kanülenbereich längs in einem Lichtleiter-Faserbündel erstrecken und davon umgeben sind. Aus der Schrift DE 33 37 166 A1 ist ein zahnärztliches Spritzhandstück bekannt, bei dem sich ein Lichtleiter, eine Wasserleitung und ein Luftkanal nach vorne erstrecken. Aus der FR 1 285 767 ist ein dentales Handstück bekannt, bei dem sich eine Wasserleitung und eine Luftleitung nach vorne erstrecken. Die Leitungen sind dabei so ausgerichtet, dass sich die abgegebenen Medien in einem Abstand vor den Austrittsöffnungen treffen. Ein insoweit vergleichbares Spritzhandstück ist auch aus der Schrift DE 37 34 862 A1 bekannt.
Der Erfindung liegt die Aufgabe zugrunde, bei einem Handstück gemäß dem Oberbegriff des Anspruchs 1 die Medienabgabe zu verbessern. Dabei soll eine einfache, kleine und vorzugsweise kostengünstig herstellbare Konstruktion möglich sein.
Diese Aufgabe wird durch die Merkmale des Anspruchs 1 gelöst. Vorteilhafte Weiterbildungen der Erfindung sind in den zugehörigen Unteransprüchen beschrieben.
Der Erfindung liegt die Erkenntnis zugrunde, dass zum einen eine Konstruktion, die einen Sprayaustritt im Bereich der Austrittsöffnung herbeiführt, kompliziert und teuer ist, und dass es zum anderen aus Gründen unterschiedlicher Behandlungsanforderungen vorteilhaft ist, einen Wasserstrahl und einen Spraystrahl zur Verfügung zu haben.
Beim erfindungsgemäßen Handstück nach Anspruch 1 sind die Medienleitungen derart ausgerichtet, dass die abgegebenen Medien in einem bestimmten Abstand vor der Austrittszone aufeinandertreffen, um einen Spray zu erzeugen. Bei einer solchen Ausgestaltung verlassen die Medien die Austrittsöffnungen zunächst getrennt voneinander, z. B. als Wasser und Luft, wobei erst in einem Abstand vor den Austrittsöffnungen die Spraybildung selbsttätig durch ein Aufeinandertreffen der Strömungsstrahlen erfolgt. Bei der erfindungsgemäßen Ausgestaltung ist deshalb nicht nur die Konstruktion wesentlich vereinfacht, weil ein Spray bildende Maßnahmen in der Austrittsöffnung entfallen, sondern es läßt sich auch eine einfache und kleine Konstruktion verwirklichen.
Außerdem stehen der Behandlungsperson bei der Behandlung unterschiedliche Medienzusammensetzungen zur Verfügung, z. B. Wasser, Luft oder Spray, die dadurch ausgenutzt werden können, dass das Handstück bei seiner Benutzung in unterschiedlich großen Abständen von der Behandlungsstelle benutzt wird. Bei einem Behandlungsabstand von den Austrittsöffnungen, der kleiner ist, als der Abstand, bei dem die Medien aufeinandertreffen, kann die Wirksamkeit des einen Mediums, z. B. Wasser, direkt ausgenutzt werden, z. B. eine stärkere Strömung. Dagegen kann in einem größeren Abstand von den Austrittsöffnungen eine Sprayströmung genutzt werden. Im Übrigen wird ein Spray vorteilhafter Zusammensetzung erzeugt.

Erfindungsgemäß weist der Lichtleiter in seinem vorderen Längsbereich wenigstens zwei Längsnuten auf, in die die durch Hohlleitungen gebildeten Medienleitungen radial von außen nach innen einsetzbar angeordnet sind. Hierdurch werden mehrere Vorteile erreicht. Zum einen ermöglicht die Zugänglichkeit der Längsnuten von außen nicht nur eine einfache und kostengünstige Herstellung, sondern es lassen sich auch die Medienleitungen einfach und schnell darin einsetzen und positionieren, z. B. mit einer den Lichtleiter und die Medienleitungen umgebenden Hülse, bei der es sich um eine Innenhülse handeln kann.
Bei einem Kanülenhandstück ist die Hülse vorzugsweise von einer die Kanüle bildenden Außenhülse umgeben.
Eine solche Hülse erleichtert und verbessert die Vorfertigung einer die Medienleitungen, den Lichtleiter und die Hülse umfassenden Baueinheit.

Ein weiterer Vorteil besteht darin, dass beim Vorhandensein von zwei Längsnuten, die einen sich in der Umfangsrichtung erstreckenden Abstand voneinander aufweisen oder einander diametral gegenüberliegen, eine Querschnittsform mit einem zwischen den Medienleitungen angeordneten Lichtleiter-Stegabschnitt ergeben, der seitliche Erweiterungen aufweist, die die Medienleitungen seitlich hintergreifen. Hierdurch erhält der Lichtleiter eine Querschnittsform, die mit der Form eines sogenannten Hundeknochens vergleichbar ist. Diese Form führt nicht nur zu einer Stabilisierung des Lichtleiters an sich, sondern auch zu einer Stabilisierung der aus dem Lichtleiter und den Medienleitungen sowie vorzugsweise auch der Hülse bestehenden Baueinheit. Außerdem ergibt sich eine kompakte und große Querschnittsform und Lichtabstrahlfläche für den Lichtleiter, wodurch die Beleuchtung der Behandlungsstelle verbessert wird.
Erfindungsgemäß liegen die Stirnflächen des Lichtleiters und der wenigstens einen Medienleitung sowie vorzugsweise auch der Innenhülse und gegebenenfalls auch der Außenhülse in einer gemeinsamen Austrittsfläche, die vorzugsweise eine ebene Fläche ist. Bei einem Kanülenhandstück bildet diese Austrittsfläche die Stirnfläche der Kanüle. Diese Ausgestaltung vermeidet Ecken, in denen sich Schmutz und Schadstoffe festsetzen können und sie erleichtert das Reinigen und Pflegen des Handstücks. Außerdem ergibt sich bei einer Kanüle eine das Körpergewebe schonende Stirnfläche.
Die erfindungsgemäßen Ausgestaltungen eignen sich deshalb sowohl für ein Arbeitshandstück als auch für ein Sondenhandstück oder Funktionshandstück und insbesondere für ein Kanülenhandstück, das insbesondere zum Zuführen von Medien eingerichtet ist.
Im Rahmen der Erfindung weist die wenigstens eine Längsnut eine vorzugsweise halbrundförmige Grundform auf, deren Querschnitts- und Krümmungsgröße der Querschnitts- und Krümmungsgröße der zugehörigen Medienleitung entspricht, so dass die Medienleitung an der Grundfläche der zugehörigen Längsnut eine positionierte Anlage und Stütze findet.
In weiteren Unteransprüchen sind Merkmale enthalten, die eine kleine, kostengünstig herstellbare und sichere Konstruktion und Funktion des Handstücks ergeben.
Nachfolgend werden vorteilhafte Ausgestaltungen der Erfindung anhand von vorteilhaften Ausführungsbeispielen und Zeichnungen näher erläutert. Es zeigt.
- Fig. 1: ein erfindungsgemäßes Handstück in der Form eines Kanülenhandstücks in perspektivischer Seitenansicht;
- Fig. 2: die Kanüle des Handstücks im axialen Längsschnitt;
- Fig. 3: die Kanüle im axialen Längsschnitt und in perspektivischer Darstellung;
- Fig. 4: den vorderen Endbereich der Kanüle in vergrößerter perspektivischer Darstellung.
Die Hauptteile des in seiner Gesamtheit mit 1 bezeichneten Handstücks sind ein Handstückkörper 2, der sich von einem hinteren Ende in länglicher Bauform nach einer Seite gekrümmt oder abgewinkelt zu einem vorderen Ende erstreckt, zwei Medienleitungen 3, 4 z. B. für Wasser und Luft, die sich vom hinteren Ende durch den Handstückkörper 2 nach vorne erstrecken, eine in ihrer Gesamtheit mit 5 bezeichnete Beleuchtungseinrichtung, die im vorderen Endbereich des Handstückkörpers 2 eine Lichtabstrahlfläche 5a aufweist, und ein am hinteren Ende des Handstückkörpers 2 angeordnetes Kupplungselement 2a, das ein Teil einer Kupplungsvorrichtung ist, mit der das Handstück 1 mit einer flexiblen Versorgungsleitung (nicht dargestellt) verbunden bzw. verbindbar ist, in der sich der Zuführung der Medien dienende Medienleitungsabschnitte erstrecken, die beim Kuppeln der Kupplungsvorrichtung mit dem hinteren Enden der Medienleitungen 3, 4 ebenfalls kuppelbar sind.

Die Medienleitungen 3, 4 erstrecken sich im Handstückkörper 2 von dessen hinteren Endbereich zu dessen vorderen Endbereich, wobei sie an Austrittsöffnungen münden, die auf die mit dem Handstück 1 einwirkende Operationsstelle gerichtet sind, um in deren Bereich eine Blasfunktion, eine Spülfunktion oder eine Kühlfunktion auszuführen. Die Lichtabstrahlfläche 5a ist ebenfalls auf die Behandlungsstelle gerichtet ist, um diese zu beleuchten.

Beim in den Figuren dargestellten Ausführungsbeispiel, bei dem das Handstück 1 ein Kanülenhandstück ist, befinden sich die Austrittsöffnungen 3a, 4a der Medienleitungen 3, 4 und die Lichtabstrahlfläche 5a der Beleuchtungseinrichtung 5 an der Stirnseite einer den vorderen Endbereich des Handstückkörpers 2 bildenden Kanüle 6, die durch eine lösbare Kupplungsvorrichtung 7 in Form einer Schnellschlußverbindung mit dem vorderen Ende eines sich ebenfalls länglich erstreckenden Griffteils 8 lösbar verbunden ist, das den hinteren Bereich des Handstückkörpers 2 bildet. Die Kanüle 6 kann jedoch auch unlösbar oder einteilig mit dem Griffteil 8 verbunden sein. Außerdem erstreckt sich beim Ausführungsbeispiel die Kanüle 6 gekrümmt zu einer Seite des Handstückkörpers 2 hin, wodurch sie sich insbesondere für eine dentalmedizinische Behandlung im Mundraum eines Patienten eignet. Im Rahmen der Erfindung kann die Kanüle 6 sich jedoch auch in einer anderen Form und Richtung erstrecken, z. B. gerade.

Die Kupplungsvorrichtung 7 ist vorzugsweise eine selbsttätig verrastende Steckkupplung, insbesondere eine an sich bekannte Steck/Drehkupplung mit einer Kupplungsausnehmung 7a an dem einen Teil und einem darin einsteckbaren und drehbaren Kupplungszapfen 7b an dem anderen Teil, wobei vorzugsweise der Kupplungszapfen 7b von der Kanüle 6 nach hinten absteht und die Kupplungsausnehmung 7a im vorderen Endbereich des Griffteils 8 angeordnet ist und nach vorne ausmündet.

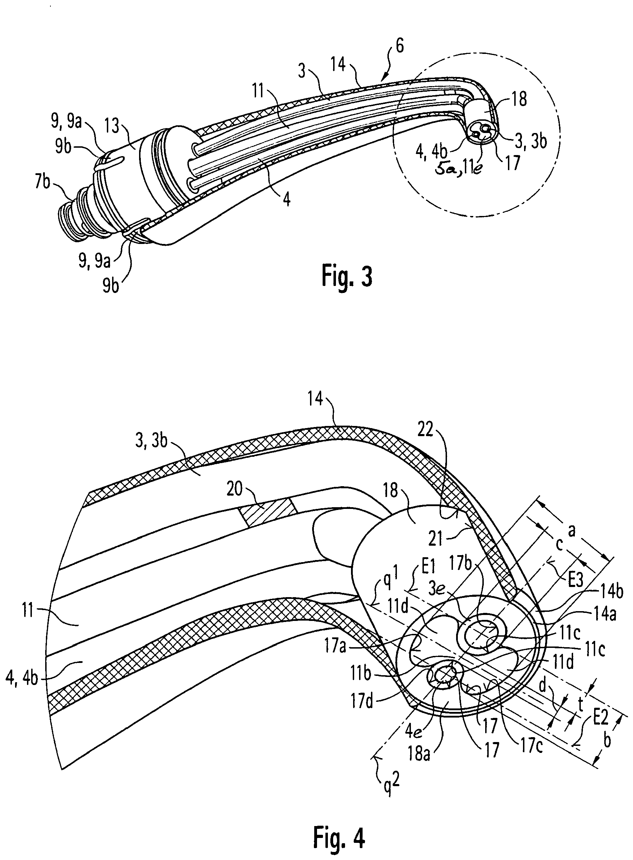

Zur Verrastung der Kanüle 6 im gekuppelten Zustand können ein oder mehrere in Fig. 3 dargestellte Rastnasen 9a einer Verrastungsvorrichtung 9, z. B. in Form von Federzungen 9b, insbesondere im hinteren Endbereich der Kanüle 6, angeordnet sein, die an nicht dargestellten Gegenrastelementen des Griffteils 8 verrasten.

Die Beleuchtungseinrichtung 5 weist vorzugsweise einen Lichtleiter 11 auf, der im Handstückkörper 2 angeordnet und einer nicht dargestellten Lichtquelle vorgeordnet ist und sich nach vorne bis zu einer Austrittsfläche 12 erstreckt, die vorzugsweise eine ebene Fläche ist und beim Ausführungsbeispiel eines Handstücks 1 mit einer Kanüle 6 die Stirnfläche der Kanüle 6 bildet. Bei einem Kanülenhandstück sind das hintere Ende des Lichtleiters 11 im hinteren Ende der Kanüle 6 und die Lichtquelle im Griffteil 8 angeordnet.

Die Hauptteile der Kanüle 6 sind ein Basisteil 13, das, z.B. mit dem von ihm nach hinten abstehenden Kupplungszapfen 7b, einen Kanülenfuß bildet, ein vorzugsweise seitlich gekrümmter und z. B. nach vorne verjüngter Kanülenmantel 14, der Lichtleiter 11, der sich im wesentlichen zentral in einem Durchgangsloch 15 im Basisteil 13 und dann im Hohlraum 16 des Kanülenmantels 14 sowie durch ein weiteres Durchgangsloch 17 in einer im vorderen Endbereich des Kanülenmantels 14 sitzenden Innenhülse 18 bis zur Stirnfläche der Kanüle 6 erstreckt, und zwei die Medienleitungen 3, 4 längsabschnittsweise bildende Hohlleitungen 3b, 4b, die an sich im Basisteil 13 erstreckenden Längskanälen 3c, 4c angeschlossen sind und sich vorzugsweise ebenfalls bis zur die Stirnfläche der Kanüle 6 bildenden Austrittsfläche 12 erstrecken und mit ihren Austrittsöffnungen 3a, 4a in der Austrittsfläche 12 münden. Die Hohlleitungen 3b, 4b erstrecken sich ebenfalls durch das Durchgangsloch 17 in der Innenhülse 18, das für den Lichtleiter 11 und die Hohlleitungen 3b, 4b ein gemeinsames Durchgangsloch 17 bildet. Die rückseitige Verbindung der Hohlleitungen 3b, 4b mit den Längskanälen 3c, 4c kann durch Steckverbindungen 3d, 4d erfolgen, bei denen die Hohlleitungen 3b, 4b auf oder in entsprechende Verbindungselemente auf- oder eingesteckt sind. Bei den Hohlleitungen 3b, 4b kann es sich um Röhrchen oder Schläuche handeln, die z. B. aus Metall oder Kunststoff bestehen können.

Der Lichtleiter 11 weist im Bereich des Basisteils 13 einen kreisrunden Querschnitt auf, und er ist mit geringem Bewegungsspiel in das Durchgangsloch 15 mit einem entsprechenden kreisrunden Querschnitt von vorne eingesteckt und abgedichtet, z. B. mittels einer Ringdichtung 19, die einen Dichtring aufweist, der in einer Ringnut in der Lochwandung sitzt. In der Durchströmrichtung hinter dem Basisteil 13 ändert der Lichtleiter 11 seine Querschnittsform derart, daß er in seinem vorderen Endbereich in der einen Querrichtung q1 eine vergrößerte Breite a und in der anderen quer dazu gerichteten Querrichtung q2 eine Breite b aufweist, die geringer ist als die vergrößerte Breite a. Dabei erstreckt sich der Lichtleiter 11 in diesem mit 11a bezeichneten Endbereich mit einem taillierten Stegabschnitt 11b zwischen den Hohlleitern 3b, 4b, so dass diese sich an den Breitseiten des Lichtleiters 11 befinden. Dabei ist die vergrößerte Breite a größer als die vorzugsweise kreisrunde Querschnittsgröße c der Hohlleiter 3b, 4b, wobei der eine Hohlleiter 3b, insbesondere für Luft, eine größere Querschnittsgröße c als der andere Hohlleiter 4b aufweisen kann. In diesem Endbereich 11a weist der Lichtleiter 11 vorzugsweise im wesentlichen mittig angeordnete Längsnuten 11c auf, deren Querschnittsform und Größe vorzugsweise an die Querschnittsform und Größe der Hohlleitungen 3b, 4b angepaßt ist, so dass diese direkt an den Flächen der Längsnuten 11c anliegen. Das Durchgangsloch 17 weist deshalb eine Querschnittform mit vier einander diametral gegenüberliegenden Lochabschnitten 17a, 17b, 17c, 17d, die in ihren einander zugewandten Innenbereichen ineinander übergehen. Hierdurch hat das Durchgangsloch 17 eine Querschnittsform, die im wesentlichen die Form eines vierblätterigen Kleeblatts ist. Wie bereits beschrieben, weisen die mit 17b, 17d bezeichneten Lochabschnitte eine gerundete, vorzugsweise eine halbkreisförmige Querschnittsform auf, wobei auch die Längsnuten 11c eine halbkreisförmige Querschnittsform haben. Hierdurch ist gewährleistet, dass die Ränder der Längsnuten 11c nicht wesentlich außerhalb der sich parallel zueinander erstreckenden Längsmittelebenen E1, E2 der Hohlleitungen 3b, 4b angeordnet sind und deshalb sowohl ein radiales Einsetzen der Hohlleitungen 3b, 4b von radial außen in die Längsnuten 11c möglich ist und Freiräume zwischen den Hohlleitungen 3b, 4b und Nutwänden vermieden werden oder vermindert sind. Die Tiefe t der Längsnuten 11c entspricht vorzugsweise etwa der halben Querschnittsabmessung c des zugehörigen Hohlleiters 3b, 4b.

Die mit E3 bezeichnete und die Längsachsen der Längsnuten 11c und der Hohlleitungen 3b, 4b enthaltende Längsebene, insbesondere Längsmittelebene, ist vorzugsweise etwa in der Ebene der Krümmung oder Abwinklung des Handstücks 1 bzw. der Kanüle 6 angeordnet.

Die einander gegenüberliegenden Endbereiche 11d des Stegabschnitts 11b sind bezüglich dem Abstand d der Hohlleitungen 3b, 4b erweitert, so dass die Querschnittsform des Lichtleiters 11 in etwa der Form eines sogenannten Hundeknochens entspricht. Die zugehörigen Durchgangslochabschnitte 17a, 17c weisen vorzugsweise ebenfalls eine gerundete Querschnittsform auf, insbesondere eine ellipsenförmige Querschnittsform. Die Formgebung ist so ausgebildet, dass der Lichtleiterabschnitt 11a und die Hohlleitungen 3b, 4b das Durchgangsloch 17 im wesentlichen formschlüssig ausfüllen. Um zu vermeiden, dass Verunreinigungen, z. B. Körperflüssigkeiten, durch Spalte des Durchgangslochs 17 in die Kanüle 6 gelangen, ist das Durchgangsloch 17 abgedichtet. Hierdurch wird auch ein Fluten bzw. Eindringen von heißem Wasserdampf während eines Thermodesinfektionsvorgangs vermieden. Die Abdichtung kann z. B. durch ein in die Fugen eingeführtes Dichtmittel z. B. ein Kleber, erfolgen, das den Lichtleiter 11, die Hohlleitungen 3b, 4b und die Innenhülse 18 zu einer Baueinheit verbinden kann, die vorzugsweise vorfertigbar ist.

Aus den vorgenannten Gründen kann auch die Innenhülse 18 in dem sie aufnehmenden Lochabschnitt 21 abgedichtet, z. B. verklebt, sein. Der Lochabschnitt 21 ist vorzugsweise innen durch eine Stufenfläche 22 begrenzt, an der die Innenhülse 18 anliegt und positioniert ist.

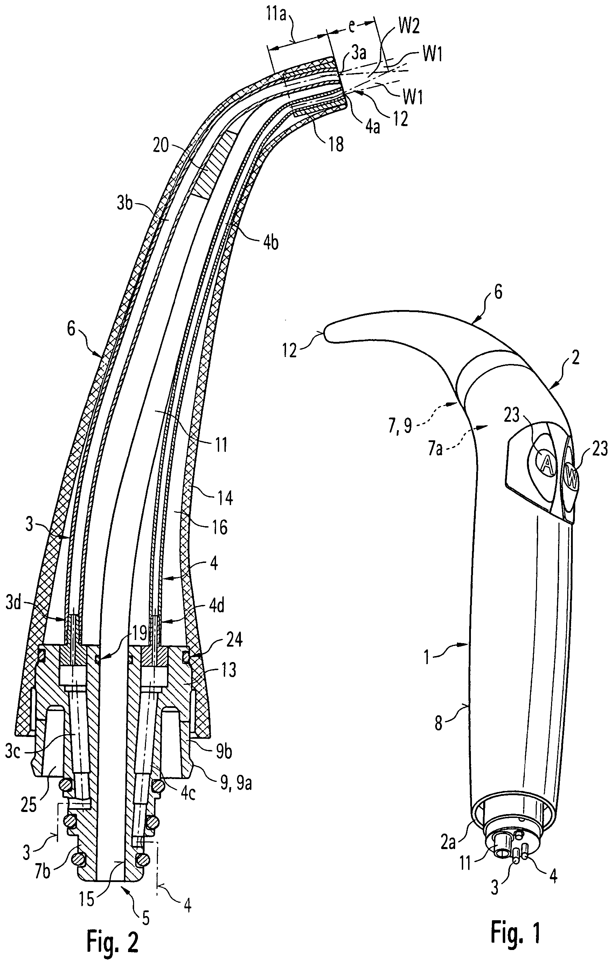

Die beim Ausführungsbeispiel vorzugsweise durch Hohlleitungen 3b, 4b gebildeten Medienleitungen 3, 4 münden mit aufeinanderzu geneigten Längsachsen aus dem Handstückkörper 2 bzw. der Kanüle 6 aus. Der Austritts-Neigungswinkel W1 bezüglich der vorhandenen Längsrichtung kann z. B. etwa 8° betragen, wobei die Achsen bzw. Austrittsströme sich in einem Abstand e von den Austrittsöffnungen 3a, 4a schneiden bzw. kreuzen und einen Winkel W2 von etwa 16° einschließen. Wie aus Fig. 2 erkennbar ist, sind nur die Endabschnitte der Hohlleitungen 3b, 4b aufeinanderzu geneigt.

Im Hohlraum 16 ist zur Positionierung wenigstens des Lichtleiters 11 ein Distanzstück 20 zwischen dem Kanülenmantel 14 und in dem Lichtleiter 11 oder auch dem oder den Hohlleitern 3b, 4b angeordnet.

Vorzugsweise befinden sich die Stirnfläche 14a des Kanülenmantels 14, die Stirnfläche 18a der Hülse 18, die Stirnflächen 3e, 4e der Hohlleitungen 3b, 4b und die Stirnfläche 11e des Lichtleiters 11 in der gemeinsamen und vorzugsweise ebenen Austrittsfläche 12, die beim Ausführungsbeispiel in Form einer Kanüle 6 deren Stirnfläche bildet. Hierdurch werden Vorsprünge, Vertiefungen und Kanten vermieden, was nicht nur eine schonende Behandlung der Behandlungsstellen ermöglicht, sondern es läßt sich auch die Reinhaltung, Desinfektion oder Sterilisation wenigstens des vorderen Endbereichs erleichtern und verbessern. Der Übergang zwischen der Stirnfläche und der sich daran anschließenden Mantelfläche ist vorzugsweise durch eine Fase 14b gebrochen oder gerundet.

Dem Handstück 1 ist vorzugsweise im vorderen Bereich des Griffteils 8 wenigstens ein Betätigungselement 23, z. B. eine Drucktaste, zugeordnet, durch dessen manuelle Betätigung ein nicht dargestelltes Ventil in der zugehörigen Medienleitung 3, 4 geöffnet wird, um den Medienaustritt einzuschalten. Die Abschaltung kann z. B. dadurch erfolgen, dass das zugehörige Ventil schließt, wenn das Betätigungselement 23 losgelassen wird. Eine solche Betätigungsvorrichtung kann beim Vorhandensein von mehreren Medienleitungen jeweils in der entsprechenden Anzahl vorgesehen sein. Wie aus Fig. 1 zu erkennen ist, sind zwei Betätigungselemente 23 auf Umfang des Griffteils 8 angeordnet, vorzugsweise auf der der abgewinkelten oder gekrümmten Kanülenspitze abgewandten Seite des Handstücks 1.

Der vom Kanülenmantel 14 umgebene Hohlraum 16 der Kanüle 6 ist rückseitig durch das Basisteil 13 verschlossen, das von hinten in den Kanülenmantel fest eingesetzt ist und durch eine Ringdichtung 24 abgedichtet ist, die z. B. durch einen Dichtring gebildet ist, der in einer Ringnut im Basisteil 13 sitzt.

Die Federarme 9b der Verrastungsvorrichtung 9 sind vorzugsweise durch segmentförmige Umfangsabschnitte des Basisteils 13 gebildet, die durch die Anordnung einer nach hinten ausmündenden Ringnut 25 gebildet sind.

Die Kupplungsvorrichtung 7 mit dem Kupplungszapfen 7d ist in Form einer Steck/Drehkupplung an sich bekannt und braucht deshalb nicht näher beschrieben zu werden. Wesentlich ist, daß die Steck/Drehkupplung Z-förmige Durchgangskanäle für die wenigstens eine Medienleitung 3, 4 aufweist, die in bekannter weise die zylindrische oder stufenzylindrische Teilungsfuge zwischen dem Kupplungszapfen 7b und der Kupplungsausnehmung 7a Z-förmig durchsetzen und durch in Fig. 2 dargestellte Dichtringe von die Teilungsfuge abdichtenden Ringdichtungen abgedichtet ist. Der Z-förmige Verlauf der Medienleitungen ist in Fig. 2 strichpunktiert angedeutet.

Nachfolgend werden noch weitere Vorteile des erfindungsgemäßen Handstücks 1 benannt.

Die Beleuchtungsvorrichtung 5: Die erfindungsgemäße Anordnung des Lichtleiters 11 und der wenigstens einen Medienleitung 3 bzw. 4 ermöglicht eine gute direkte Beleuchtung ohne Abschattung, wobei die Beleuchtung mit einer hohen Lichtintensität erfolgt, weil eine verhältnismäßig große Lichtabstrahlfläche vorhanden ist und das Licht mit wenig Verlust von der Lichtquelle bis zum Objekt (Zahn) geleitet wird. Hierzu trägt auch die vorzugsweise ebene und gemeinsame Abstrahlfläche 12 bei, die eine gute Reinigung bei geringem Reinigungsaufwand ermöglicht.

Um die Beleuchtung an unterschiedliche Behandlungsmaßnahmen anpassen zu können, ist es vorteilhaft, eine nicht dargestellte Einstellvorrichtung vorzusehen, die es ermöglicht, die Lichtintensität wahlweise zu verringern und zu vergrößern.

Medienzuführung: Das erfindungsgemäße Handstück 1 ermöglicht es, wahlweise Wasser, trockene Luft oder ein Spray der Behandlungsstelle zuzuführen. Da die erfindungsgemäße Ausgestaltung der Mündungsöffnungen unempfindlich gegen Verschmutzung ist, wird eine konstante Sprayqualität erreicht.

Hygiene: Die erfindungsgemäße Ausgestaltung im Bereich der vorzugsweise glatten Austrittsfläche 12 ermöglicht auch eine gute Wisch-Desinfizierbarkeit des Austrittsbereichs 1 bzw. der Kanüle 6. Da die vom Medium kontaktierten Bauteile eine Keime reduzierende Wirksamkeit auf das zugehörige Medium ausüben, insbesondere aus Ag-Ion bestehen, wird die Hygiene gefördert und verbessert.

Da im übrigen im Bereich des Medienaustritts aus dem Handstück 1 bzw. aus der Kanüle 6 keine offenen Toträume vorhanden sind, ist eine Thermodesinfektion möglich und vorteilhaft.

## Patentansprüche

1. Medizinisches, insbesondere dentalmedizinisches, Handstück (1), in dem sich ein Lichtleiter (11) und wenigstens zwei Medienleitungen (3, 4) nach vorne erstrecken und im vorderen Bereich des Handstücks (1) an zwei voneinander getrennten Austrittsöffnungen (3a, 4a) austreten,
wobei die Medienleitungen (3, 4) derart ausgerichtet sind, dass die abgegebenen Medien in einem bestimmten Abstand (e) vor den Austrittsöffnungen (3a, 4a) aufeinander treffen, um einen Spray zu erzeugen,
wobei der Lichtleiter (11) und die Medienleitungen (3, 4) sich bis zu einer gemeinsamen Austrittsfläche (12) erstrecken,
wobei der Lichtleiter (11) in seinem vorderen Endbereich (11a) wenigstens zwei Längsnuten (11c) aufweist, in die die durch Hohlleitungen (3b, 4b) gebildeten Medienleitungen (3, 4) radial einsetzbar sind.

2. Handstück nach Anspruch 1,
**dadurch gekennzeichnet,**
**dass** die Austrittsfläche (12) eine ebene Fläche ist.

3. Handstück nach Anspruch 1 oder 2,
**dadurch gekennzeichnet,**
**dass** die wenigstens eine Hohlleitung (3b, 4b) eine runde Querschnittsform aufweist, wobei die Querschnittsgrößen (c) von z. B. zwei Hohlleitungen (3b, 4b) unterschiedlich sein können.

4. Handstück nach einem der vorherigen Ansprüche 1 bis 3,
**dadurch gekennzeichnet,**
**dass** zwei vorhandene Längsnuten (11c) einen sich in die Umfangsrichtung erstreckenden Abstand voneinander aufweisen, sich vorzugsweise einander gegenüberliegen.

5. Handstück nach einem der vorherigen Ansprüche 1 bis 4,
**dadurch gekennzeichnet,**
**dass** die Querabmessung (a) des Lichtleiters (11), die sich quer zu einer die Längsachsen der Längsnuten (11c) oder der Hohlleitungen (3b, 4b) enthaltenden Längsebene (E3) des Handstücks (1) erstreckt, größer ist als die sich parallel zur Längsmittelebene (E3) erstreckende Querabmessung (b) des Lichtleiters (11).

6. Handstück nach einem der vorherigen Ansprüche 1 bis 5,
**dadurch gekennzeichnet,**
**dass** die Tiefe (t) der wenigstens zwei Längsnuten (11c) im wesentlichen nicht größer ist als die halbe Querschnittsabmessung (c) der zugehörigen Hohlleitung (3b) bzw. (4b).

7. Handstück nach einem der vorherigen Ansprüche 1 bis 6,
**dadurch gekennzeichnet,**
**dass** ein vorderer Endbereich oder eine Kanüle (6) des Handstücks (1) seitlich gekrümmt oder abgewinkelt ist und die die Längsachsen der Hohlleitungen (3b, 4b) enthaltende Längsebene (E3) sich im wesentlichen in der Ebene der Krümmung oder Abwinklung erstreckt.

8. Handstück nach einem der Ansprüche 1 bis 7,
**dadurch gekennzeichnet,**
**dass** der Lichtleiter (11) und die Hohlleitungen (3b, 4b) wenigstens in ihrem vorderen Endbereich von einer Hülse (14) oder Innenhülse (18) umgeben sind.

9. Handstück nach Anspruch 8,
**dadurch gekennzeichnet,**
**dass** der Lichtleiter (11) und die Hohlleitungen (3b, 4b) an Innenmantelflächenabschnitten der Hülse (18) anliegen, die an die Form der zugewandten Mantelflächenabschnitte des Lichtleiters (11) und der Hohlleitungen (3b, 4b) angepaßt sind.

10. Handstück nach Anspruch 8 oder 9,
**dadurch gekennzeichnet,**
**dass** die Hülse (18) an ihrem inneren Ende an einer Schulterfläche (22) des sie aufnehmenden Loches anliegt.

11. Handstück nach einem der vorherigen Ansprüche,
**dadurch gekennzeichnet,**
**dass** die Austrittsöffnungen (3a, 4a) an der Stirnseite einer Kanüle (6) angeordnet sind.

## Claims

1. Medical, in particular dental, handpiece (1) in which a light guide (11) and at least two media lines (3, 4) extend forwards and emerge in the front region of the handpiece (1) at two outlet openings (3a, 4a) separate from each other, wherein the media lines (3, 4) are oriented in such a way that the dispensed media meet each other at a defined distance (e) in front of the outlet openings (3a, 4a) in order to generate a spray, wherein the light guide (11) and the media lines (3, 4) extend as far as a common outlet surface (12), wherein the light guide (11) has, in its front end region (11a), at least two longitudinal grooves (11c) into which the media lines (3, 4), formed by hollow lines (3b, 4b), are radially insertable.

2. Handpiece according to Claim 1, **characterized in that** the outlet surface (12) is a plane surface.

3. Handpiece according to Claim 1 or 2, **characterized in that** the at least one hollow line (3b, 4b) has a round cross-sectional shape, wherein the cross-sectional sizes (c) of e.g. two hollow lines (3b, 4b) can be different.

4. Handpiece according to one of Claims 1 to 3, **characterized in that** two longitudinal grooves (11c) are present, are at a distance from each other in the circumferential direction and preferably lie opposite each other.

5. Handpiece according to one of Claims 1 to 4, **characterized in that** the transverse dimension (a) of the light guide (11), which dimension extends transversely with respect to a longitudinal plane (E3) of the handpiece (1) containing the longitudinal axes of the longitudinal grooves (11c) or of the hollow lines (3b, 4b), is greater than the transverse dimension (b) of the light guide (11), which dimension extends parallel to the longitudinal central plane (E3).

6. Handpiece according to one of Claims 1 to 5, **characterized in that** the depth (t) of the at least two longitudinal grooves (11c) is substantially not any greater than half the cross-sectional dimension (c) of the associated hollow line (3b) or (4b).

7. Handpiece according to one of Claims 1 to 6, **characterized in that** a front end region or a cannula (6) of the handpiece (1) is laterally curved or angled, and the longitudinal plane (E3) containing the longitudinal axes of the hollow lines (3b, 4b) extends substantially in the plane of the curve or angle.

8. Handpiece according to one of Claims 1 to 7, **characterized in that** the light guide (11) and the hollow lines (3b, 4b) are surrounded, at least in their front end region, by a sleeve (14) or inner sleeve (18).

9. Handpiece according to Claim 8, **characterized in that** the light guide (11) and the hollow lines (3b, 4b) bear on inner circumferential surface portions of the sleeve (18), which are adapted to the shape of the facing circumferential surface portions of the light guide (11) and of the hollow lines (3b, 4b).

10. Handpiece according to Claim 8 or 9, **characterized in that** the sleeve (18) bears, at its inner end, on a shoulder surface (22) of the hole that receives it.

11. Handpiece according to one of the preceding claims, **characterized in that** the outlet openings (3a, 4a) are arranged on the front end of a cannula (6).

## Revendications

1. Pièce à main médicale (1), en particulier médico-dentaire (1), dans laquelle une fibre optique (11) et au moins deux conduites de fluides (3, 4) s'étendent vers l'avant et sortent dans la région avant de la pièce à main (1) au niveau de deux ouvertures de sortie séparées l'une de l'autre (3a, 4a),
les conduites de fluide (3, 4) étant orientées de telle sorte que les fluides délivrés se rejoignent à une distance déterminée (e) avant les ouvertures de sortie (3a, 4a) pour générer un jet de pulvérisation,
la fibre optique (11) et les conduites de fluide (3, 4) s'étendant jusqu'à une surface de sortie commune (12),
la fibre optique (11) présentant dans sa région d'extrémité avant (11a) au moins deux rainures longitudinales (11c) dans lesquelles les conduites de fluide (3, 4) formées par des conduites creuses (3b, 4b) peuvent être insérées radialement.

2. Pièce à main selon la revendication 1,
**caractérisée en ce que**
la surface de sortie (12) est une surface plane.

3. Pièce à main selon la revendication 1 ou 2,
**caractérisée en ce que**
l'au moins une conduite creuse (3b, 4b) présente une forme ronde en section transversale, les grandeurs en section transversale (c) de deux conduites creuses (3b, 4b), par exemple, pouvant être différentes.

4. Pièce à main selon l'une quelconque des revendications précédentes 1 à 3,
**caractérisée en ce que**
deux rainures longitudinales existantes (11c) présentant un espacement l'une de l'autre s'étendant dans la direction périphérique et sont de préférence en regard l'une de l'autre.

5. Pièce à main selon l'une quelconque des revendications précédentes 1 à 4,
**caractérisée en ce que**
la dimension transversale (a) de la fibre optique (11), qui s'étend transversalement à un plan longitudinal (E3) de la pièce à main (1) contenant les axes longitudinaux des rainures longitudinales (11c) ou des conduites creuses (3b, 4b), est supérieure à la dimension transversale (b) de la fibre optique (11) s'étendant parallèlement au plan médian longitudinal (E3).

6. Pièce à main selon l'une quelconque des revendications précédentes 1 à 5,
**caractérisée en ce que**
la profondeur (t) des au moins deux rainures longitudinales (11c) n'est sensiblement pas supérieure à la moitié de la dimension en section transversale (c) de la conduite creuse associée (3b), respectivement (4b).

7. Pièce à main selon l'une quelconque des revendications précédentes 1 à 6,
**caractérisée en ce**
**qu'**une région d'extrémité avant ou une canule (6) de la pièce à main (1) est courbée ou coudée latéralement et le plan longitudinal (E3) contenant les axes longitudinaux des conduites creuses (3b, 4b) s'étend essentiellement dans le plan de la courbure ou du coudage.

8. Pièce à main selon l'une quelconque des revendications 1 à 7,
**caractérisée en ce que**
la fibre optique (11) et les conduites creuses (3b, 4b), au moins dans leur région d'extrémité avant, sont entourées par une douille (14) ou une douille intérieure (18).

9. Pièce à main selon la revendication 8,
**caractérisée en ce que**
la fibre optique (11) et les conduites creuses (3b, 4b) s'appliquent contre des portions de surface d'enveloppe intérieure de la douille (18) qui sont adaptées à la forme des portions de surface d'enveloppe tournées vers elles de la fibre optique (11) et des conduites creuses (3b, 4b).

10. Pièce à main selon la revendication 8 ou 9,
**caractérisée en ce que**
la douille (18) s'applique au niveau de son extrémité intérieure contre une surface d'épaulement (22) du trou qui la reçoit.

11. Pièce à main selon l'une quelconque des revendications précédentes,
**caractérisée en ce que**
les ouvertures de sortie (3a, 4a) sont disposées au niveau du côté frontal d'une canule (6).
